# EUROPEAN PATENT SPECIFICATION

(11) **EP 3 218 081 B1**
(45) Date of publication and mention of the grant of the patent: **12.09.2018**
(21) Application number: 15790540.7
(22) Date of filing: 04.11.2015
(51) Int. Cl.: B01D 39/12, B01D 39/20, B22F 3/00, B22F 3/10, C22C 38/22, C22C 38/44

(54) **SINTERED METAL OBJECT COMPRISING METAL FIBERS, A METHOD TO PRODUCE SAID FIBERS AND A MEMBRANEFILTER, COMPRISING SUCH AN OBJECT**
GESINTERTER METALLGEGENSTAND MIT METALLFASERN, EIN VERFAHREN ZU SEINER HERSTELLUNG DAFÜR UND EIN MEMBRANFILTER, DER SO EINEN GEGENSTAND BEINHALTET
OBJET MÉTALLIQUE FRITTÉ COMPRENANT DES FIBRES MÉTALLIQUES, UN PROCÉDÉ POUR SA FABRICATION EN UN FILTRE À MEMBRANE, QUI COMPORTE CETTE OBJET

(30) Priority: 13.11.2014 EP 14192957
(43) Date of publication of application: 20.09.2017
(73) Proprietor: NV Bekaert SA, 8550 Zwevegem (BE)
(72) Inventor: VAN HAVER, Wim, B-9880 Aalter (BE); VERSCHAEVE, Frank, B-8553 Otegem (BE)
(74) Representative: Vangheluwe, Lieven Germain L.
(86) International application number: PCT/EP2015/075682
(87) International publication number: WO 2016/075005

(56) References cited:
- WO-A2-2014/048738
- JP-A- 2014 014 830
- US-A- 4 708 741

## Description

### Technical Field

The invention relates to the field of sintered metal objects comprising metal fibers. Such products are used in a number of different applications, e.g. in filters as filtration media.

### Background Art

Sintered stainless steel fiber nonwoven webs are known out of several stainless steel alloys, such as AISI 304 and AISI 316, which are both austenitic steel grades. Sintered stainless steel fiber nonwoven webs are used in a number of applications, e.g. as filtration media. An example of filtration media comprising sintered stainless steel fibers is provided in WO2013/124142A1.

A range of other metals besides stainless steel can also be processed into sintered metal objects comprising metal fibers. Exemplary products comprising sintered titanium fibers or sintered nickel fibers are mentioned in WO2003/059556A1 for use as gas diffusion layers in electrolysers.

Although ways of welding metal fibers in a metal fiber web have been described (e.g. in WO2004/039580A1) sintering of metal fiber webs is the preferred way for bonding metal fibers at fiber contacting point in the web, because it allows to produce large surfaces of sintered product in an economic way and with high consistency.

Welding metal fibers to each other involves the application of heat heating the fibers at least at their contacting points to a temperature above melting temperature and subsequently cooling down to solidify the liquefied fibers or fiber zones. In sintering, temperature and pressure is applied during a certain time period. The fibers are fully kept below melting temperature and bonds are created by atomic diffusion between contacting fibers. Welding fibers or sintering fibers does not create the same bond between fibers; the way of bonding that has been used can be distinguished.

JP2014014830A provides a welding method for a duplex stainless steel with low nitrogen content. The method prevents weld cracking and a reduction in corrosion resistance by improving a weld metal structure. In this welding method, an electric voltage is applied between the base material and a weld material (a welding consumable) to generate an arc therebetween, which creates melting of the weld material (welding consumable). The welding consumables are metal wires having a core and a covering agent covering the metal core.

### Disclosure of the Invention

It is a first objective of the invention to provide a sintered metal object comprising metal fibers, that has excellent corrosion resistant properties, e.g. in an environment containing chlorides. It is a further objective of the invention to provide a method to produce such sintered metal objects.

A first aspect of the invention is a sintered metal object comprising metal fibers in a nonwoven web arrangement. The metal fibers comprise stainless steel fibers that have a duplex microstructure. The duplex microstructure is a mixed microstructure of austenite and ferrite. The stainless steel fibers are bonded at at least part of their contacting points by means of sinter bonds.

Duplex stainless steel grades - which are defined as stainless steel grades with mixed microstructure austenite and ferrite - are known, and are described to have compared to austenitic stainless steel improved resistance to localized corrosion, particularly pitting, crevice corrosion and stress corrosion cracking. They are typically characterized by high chromium (19-32% by weight) and molybdenum (up to 5% by weight) and lower nickel contents than austenitic stainless steels.

Duplex stainless steel grades are characterized into groups based on their alloy content (expressed in weight percentage) and corrosion resistance. Super duplex is by definition a duplex stainless steel grade with a pitting resistance equivalent number PREN > 40, where PREN = %Cr + 3.3x(%Mo + 0.5x%W) + 16x%N (all percentages are weight percentages). Usually super duplex grades have 25% or more by weight chromium. Some examples are S32760 (Zeron 100), S32750 (2507) and S32550 (Ferralium).

Although on the one hand sintered metal objects are known comprising austenitic stainless steel fiber webs, wherein the austenitic stainless steel fibers are sintered at contacting points; and on the other hand duplex stainless steel can be processed into fibers; it did not seem possible at first to produce sintered metal objects comprising sintered stainless steel fibers having a duplex microstructure of austenite and ferrite. When trying to produce such sintered objects, it was found that the duplex microstructure of the fibers and its resulting specific beneficial properties got lost in the sintering process. It turned out that in order to maintain the duplex structure and the resulting beneficial properties (e.g. excellent corrosion resistance) specific sintering parameters seemed to be required. By inventing the specific sintering parameters - as specified in the second aspect of the invention - the sintered metal objects of the first aspect of the invention could be made.

Examples of duplex and super duplex stainless steel grades for use in the invention are e.g. duplex 1.4462 and super duplex 1.4410, both according to EN10088:2005.

Preferably all stainless steel fibers in the nonwoven web arrangement have a duplex microstructure; wherein the duplex microstructure is a mixed microstructure of austenite and ferrite.

Preferably all stainless steel fibers in the sintered metal object have a duplex microstructure; wherein the duplex microstructure is a mixed microstructure of austenite and ferrite.

In a preferred embodiment, the sintered metal object is a metal fiber web consisting out of stainless steel fibers that have a duplex microstructure.

Preferably, the sintered metal object consists out of metal fibers in a nonwoven web arrangement.

Preferably, the metal fibers consist out of stainless steel fibers that have a duplex microstructure.

In a preferred embodiment, the sintered metal object is a porous object.

In a preferred embodiment, no sigma phase is present in the stainless steel fibers that have a duplex microstructure. As is known in the technical field, a sigma phase is a brittle, nonmagnetic phase of tetragonal structure, generally leading to deterioration of the corrosion resistance of a stainless steel product.

In a preferred embodiment, the stainless steel fibers having a duplex microstructure have an austenite percentage between 30 and 70 percent by volume, more preferably between 40 and 60 % by volume. The percentage austenite and ferrite can be determined as is known in the art by means of metallographic examination, X-Ray Diffraction (XRD) or magnetic measurements.

In a preferred embodiment, the stainless steel fibers having a duplex microstructure are super duplex stainless steel fibers.

In a preferred embodiment, the average grain size of the austenite grains in the duplex microstructure of the stainless steel fibers is smaller than half of the equivalent fiber diameter of the stainless steel fibers. The equivalent diameter of a stainless steel fiber is the diameter of a round circle that has the same surface area as the cross section of the stainless steel fiber that may have a cross section deviating from a circle. Such small grain sizes are preferred because stainless steel fiber webs with more favorable corrosion resistance and mechanical properties are obtained. The grain size of the austenite grains can be determined according to ASTM-E112-13 (of 2013).

In preferred embodiments, the stainless steel fibers having a duplex microstructure, have over their volume a substantially uniform weight percentage of chromium and molybdenum; and preferably also of nickel, if present. It is a benefit of such embodiments that better corrosion resistance of the sintered metal object is obtained.

In a preferred embodiment, the stainless steel fibers having a duplex microstructure comprise less than 0.3 % by weight of nitrogen.

In a preferred embodiment, the stainless steel fibers that have a duplex microstructure are substantially free of nitrides. Such absence of nitrides is preferred, because it provides better corrosion resistance.

Preferably, the stainless steel fibers that have a duplex microstructure are bundle drawn fibers; or are machined fibers; or are fibers having a quadrangular cross section (e.g. fibers shaved from wound sheet or plate); or are single end drawn fibers; or are fibers extruded or extracted from a melt.

Preferably, the stainless steel fibers that have a duplex microstructure have an equivalent diameter between 1.5 and 100 µm, more preferably between 8 and 75 µm, e.g. less than 20 µm.

In a preferred embodiment, the sintered metal object comprises more than one layer of metal fibers in a nonwoven web arrangement. At least two layers of the more than one layer of metal fibers comprise stainless steel fibers having a duplex microstructure; wherein the duplex microstructure is a mixed microstructure of austenite and ferrite; and wherein the stainless steel fibers are bonded at at least part of their contacting points by means of sinter bonds. The average equivalent diameter of the stainless steel fibers having a duplex microstructure of a first of the at least two layers differs from the average equivalent diameter of the stainless steel fibers having a duplex microstructure of a second of the at least two layers. With first and second is meant that the layers are different from each other.

In a preferred such embodiment, one or more metal meshes are provided in the metal objects, e.g. in between layers of metal fibers.

In a preferred embodiment, one or more metal meshes are provided via sinter bonds in between the first and the second of the at least two layers. Preferably, the mesh or meshes are out of duplex of super duplex steel. Examples of meshes that can be used are woven wire meshes or expanded metal sheets.

A preferred sintered metal object as in any embodiment of the first aspect of the invention comprises one or more metal meshes sintered into the sintered metal object. The one or more metal meshes can e.g. be woven wire meshes or expanded metal sheets. Preferably, the metal mesh or meshes are out of a stainless steel alloy having a duplex microstructure. Preferably, the metal mesh or meshes are out of the same alloy as the stainless steel fibers having a duplex microstructure. The mesh or meshes can be provided in between nonwoven web layers; or at the top and/or bottom of the sintered metal object.

A second aspect of the invention is a method to manufacture a sintered metal object as in the first aspect of the invention. The method comprises the steps of
- making an unsintered metal object comprising or consisting out of a nonwoven web comprising or consisting out of duplex stainless steel fibers. Preferably, the stainless fibers in the nonwoven web have a homogeneous chemical composition. With duplex stainless steel fiber is meant a stainless steel fiber out of a duplex stainless steel grade. The duplex stainless steel fiber can preferably be out of a super duplex steel grade.
- sintering the metal object in a sinter oven at a sintering temperature between 1000 and 1300 °C in a sintering atmosphere comprising nitrogen (N₂). Preferably the sintering temperature is kept between 1000°C and 1200°C, more preferably the sintering temperature is kept below 1150°C. The nitrogen partial pressure of the sintering atmosphere is between 10 to 100 mbar, preferably more than 30 mbar, more preferably more than 50 mbar; and preferably less than 70 mbar, more preferably less than 50 mbar.
- cooling down the sintered metal object in the sinter oven after sintering, wherein the cooling down in the temperature range between 950 °C and 650 °C is accomplished within less than 1.5 hours, preferably within less than 1 hour, more preferably within less than 45 minutes.

In an embodiment, the unsintered metal object comprises more than one layer of metal fibers in a nonwoven web arrangement. At least two layers of the more than one layer of metal fibers comprise stainless steel fibers comprising or consisting out of duplex stainless steel fibers. The average equivalent diameter of the duplex stainless steel fibers of a first layer differs from the average equivalent diameter of the duplex stainless steel fibers of a second layer. With first and second is meant that the layers are different from each other. In a preferred such embodiment, one or more metal meshes are provided in the metal objects, e.g. in between layers of metal fibers, and/or at the top and/or bottom of the metal object.

Preferably, the sintering temperature is kept below 1200°C.

Preferably, when the stainless steel fibers have an equivalent diameter of less than 20 µm; the nitrogen partial pressure of the sintering atmosphere is preferably more than 45 mbar.

Examples of duplex and super duplex stainless steel grades for use in the invention are e.g. duplex 1.4462 and super duplex 1.4410, both according to EN10088:2005.

Stainless steel fibers have specific dimensions; they combine a small cross section with a large length over equivalent diameter ratio. The specific dimensions are taken into account when sintering duplex fibers.

Preferably, the nitrogen pressure is maintained during the entire sintering cycle. It is believed that this avoids the sintered stainless steel fibers from ending up in homogeneous ferritic regime at high temperatures. It is believed that it avoids grain coarsening, and it is noticed that the fibers can keep their duplex microstructure.

In a preferred method, cooling from the sintering temperature down to 650°C is performed in a time period less than 1.5 hours, preferably less than 1 hour, more preferably less than 45 minutes.

Preferably, cooling from the sintering temperature down to 650°C is performed in an atmosphere comprising nitrogen gas, more preferably wherein the nitrogen partial pressure is between 10 to 100 mbar, even more preferably more than 30 mbar, even more preferably more than 50 mbar; and preferably less than 70 mbar, more preferably less than 50 mbar.

In a preferred method, the sintering atmosphere does not contain hydrogen (H₂). With "does not contain hydrogen" is meant that the sintering atmosphere does not comprise hydrogen (H₂ gas) beyond traces.

Preferably, the sintering atmosphere does not comprise hydrides.

Preferably, at least part of the cooling down of the metal object from the sintering temperature is realised at least in part by the introduction of nitrogen gas in the sinter oven.

A third aspect of the invention is a filtration membrane comprising a sintered metal object as in any embodiment of the first aspect of the invention. Such a filtration membrane has the benefit of superior corrosion resistance, especially in an environment comprising chlorides. In a preferred embodiment, the filtration membrane consists out of a sintered metal object as in any embodiment of the first aspect of the invention.

A fourth aspect of the invention is a filter comprising a filtration membrane as in the third aspect of the invention.

### Mode(s) for Carrying Out the Invention

As an example, metal fiber webs have been made out of super duplex stainless steel 1.4410 (according to EN10088:2005). Two different nonwoven webs have been made. A first web out of super duplex 1.4410 fibers of equivalent diameter 12 µm; and a second web out of super duplex 1.4410 fibers of equivalent diameter 22 µm. The super duplex fibers have been made by means of machining from an ingot, as is described in WO2014/048738A1. With each of the fiber types, a nonwoven web of weight 300 g/m² was made using wet webbing technology.

The first nonwoven web (fibers of equivalent diameter 12 µm) and the second nonwoven web (fibers of equivalent diameter 22 µm) have each been heated in a sintering oven in vacuum up to 1150 °C. During the increase of temperature, stops have been integrated for rinsing with an inert gas, e.g. nitrogen (N₂), although also argon can be used. The webs have been sintered at nitrogen (N₂) partial pressure 30 mbar (which was also the total pressure) at 1150°C during 75 minutes. Cooling from the sintering temperature 1150°C down to 650°C was performed in 45 minutes. This cooling was performed under nitrogen partial pressure of 30 mbar. The webs have been further cooled down to room temperature.

Other exemplary samples have been made using bundle drawn fibers out of duplex stainless steel alloy 1.4462 (according to EN10088:2005), which is equivalent to grade 2205. The web out of these fibers was sintered at 1100°C in otherwise similar process parameters as for the first and the second web examples.

All samples made, showed that the mixed microstructure of austenite and ferrite was present in the fibers of the sintered web. Both phases (austenite and ferrite) were present in about equal percentages by volume. Nor via XRD (X-ray diffraction), nor via metallographic analysis, a sigma phase could be detected in the stainless steel fibers of the sintered web. The stainless steel fibers in the sintered web were substantially free of nitrides. The average grain size of the austenite grains in the fibers in the web showed to be smaller than half of the equivalent fiber diameter of the fibers. The sintered webs showed to have excellent corrosion resistance when tested in an environment containing chloride ions.

It is also possible to sinter the 300 g/m² nonwoven web out of 12 µm equivalent diameter fibers out of super duplex 1.4410 and two 300 g/m² web out of 22 µm fibers out super duplex 1.4410 stacked together, thereby producing a layered sintered metal fiber web. It is e.g. also possible to put a stainless steel wire mesh out of super duplex 1.4410 between the nonwoven webs of different average equivalent diameter; and sinter so that the nonwovens webs and the mesh are sintered into one sintered metal object comprising 12 µm equivalent diameter and 22 µm equivalent diameter stainless steel fibers of duplex microstructure. Such products can be used as filtration membrane in a filter.

## Claims

1. Sintered metal object,
comprising metal fibers in a nonwoven web arrangement,
wherein said metal fibers comprise stainless steel fibers having a duplex microstructure,
wherein the duplex microstructure is a mixed microstructure of austenite and ferrite,
wherein said stainless steel fibers are bonded at at least part of their contacting points by means of sinter bonds.

2. Sintered metal object as in claim 1, wherein no sigma phase is present in said stainless steel fibers.

3. Sintered metal object as in any of the preceding claims, wherein said stainless steel fibers having a duplex microstructure, have an austenite percentage between 30 and 70 percent by volume.

4. Sintered metal object as in any of the preceding claims, wherein said stainless steel fibers having a duplex microstructure are super duplex stainless steel fibers.

5. Sintered metal object as in any of the preceding claims, wherein in the duplex microstructure of said stainless steel fibers, the average grain size of the austenite grains is smaller than half of the equivalent fiber diameter of said stainless steel fibers.

6. Sintered metal object as in any of the preceding claims, wherein said stainless steel fibers have over their volume a substantially uniform weight percentage of chromium and molybdenum.

7. Sintered metal object as in any of the preceding claims, wherein said stainless steel fibers that have a duplex microstructure are substantially free of nitrides.

8. Sintered metal object as in any of the preceding claims, wherein said stainless steel fibers having a duplex microstructure have an equivalent diameter between 1.5 and 100 µm.

9. Sintered metal object as in any of the preceding claims,
comprising more than one layer of metal fibers in a nonwoven web arrangement,
wherein at least two layers of said more than one layer of metal fibers comprise stainless steel fibers having a duplex microstructure; wherein the duplex microstructure is a mixed microstructure of austenite and ferrite;
wherein said stainless steel fibers are bonded at at least part of their contacting points by means of sinter bonds
wherein the average equivalent diameter of the stainless steel fibers having a duplex microstructure of a first of said at least two layers, differs from the average equivalent diameter of the stainless steel fibers having a duplex microstructure of a second of said at least two layers.

10. Sintered metal object as in any of the preceding claims, wherein said metal object comprises one or more metal meshes sintered into the sintered metal object.

11. Method to manufacture a sintered metal object as in any of the preceding claims, comprising the steps of
- making an unsintered metal object comprising a nonwoven web comprising duplex stainless steel fibers;
- sintering the metal object in a sinter oven at a sintering temperature, wherein the sintering temperature is between 1000 and 1300 °C, in a sintering atmosphere comprising nitrogen, wherein the nitrogen partial pressure of the sintering atmosphere is between 10 to 100 mbar;
- cooling down the sintered metal object in the sinter oven after sintering, wherein the cooling down in the temperature range between 950 °C and 650 °C is accomplished within less than 1.5 hours.

12. Method as in claim 11, wherein cooling from the sintering temperature down to 650°C is performed in a time period less than 1.5 hours.

13. Method as in claims 11 or 12, wherein cooling from the sintering temperature down to 650°C is performed in an atmosphere comprising nitrogen gas.

14. Method as in any of the claims 12 or 13, wherein at least part of the cooling down of sintered metal object from the sintering temperature is realised at least in part by the introduction of nitrogen gas in the sinter oven.

15. Filtration membrane comprising a sintered metal object as in any of the preceding claims 1 - 10.

## Patentansprüche

1. Sintermetallgegenstand,
umfassend Metallfasern in einer Vliesanordnung,
wobei die Metallfasern Fasern aus rostfreiem Stahl mit einer Duplex-Mikrostruktur umfassen,
wobei die Duplex-Mikrostruktur eine gemischte Mikrostruktur aus Austenit und Ferrit ist,
wobei die Fasern aus rostfreiem Stahl an wenigstens einem Teil ihrer Kontaktpunkte durch Sinterbindungen gebunden sind.

2. Sintermetallgegenstand gemäß Anspruch 1, wobei in den Fasern aus rostfreiem Stahl keine Sigma-Phase vorhanden ist.

3. Sintermetallgegenstand gemäß einem der vorstehenden Ansprüche, wobei die Fasern aus rostfreiem Stahl mit einer Duplex-Mikrostruktur einen Austenit-Anteil von zwischen 30 und 70 Volumenprozent aufweisen.

4. Sintermetallgegenstand gemäß einem der vorstehenden Ansprüche, wobei die Fasern aus rostfreiem Stahl mit einer Duplex-Mikrostruktur Fasern aus rostfreiem Super-Duplexstahl sind.

5. Sintermetallgegenstand gemäß einem der vorstehenden Ansprüche, wobei in der Duplex-Mikrostruktur der Fasern aus rostfreiem Stahl die mittlere Korngröße der Austenitkörner kleiner als die Hälfte des äquivalenten Faserdurchmessers der Fasern aus rostfreiem Stahl ist.

6. Sintermetallgegenstand gemäß einem der vorstehenden Ansprüche, wobei die Fasern aus rostfreiem Stahl einen über ihr Volumen im Wesentlichen gleichmäßigen Gewichtsanteil von Chrom und Molybdän aufweisen.

7. Sintermetallgegenstand gemäß einem der vorstehenden Ansprüche, wobei die Fasern aus rostfreiem Stahl mit einer Duplex-Mikrostruktur im Wesentlichen frei von Nitriden sind.

8. Sintermetallgegenstand gemäß einem der vorstehenden Ansprüche, wobei die Fasern aus rostfreiem Stahl mit einer Duplex-Mikrostruktur einen äquivalenten Durchmesser von zwischen 1,5 und 100 µm aufweisen.

9. Sintermetallgegenstand gemäß einem der vorstehenden Ansprüche,
umfassend mehr als eine Schicht von Metallfasern in einer Vliesanordnung,
wobei wenigstens zwei Schichten der mehr als einen Schicht von Metallfasern Fasern aus rostfreiem Stahl mit einer Duplex-Mikrostruktur umfassen; wobei die Duplex-Mikrostruktur eine gemischte Mikrostruktur aus Austenit und Ferrit ist,
wobei die Fasern aus rostfreiem Stahl an wenigstens einem Teil ihrer Kontaktpunkte durch Sinterbindungen gebunden sind,
wobei der mittlere äquivalente Durchmesser der Fasern aus rostfreiem Stahl mit einer Duplex-Mikrostruktur einer ersten der wenigstens zwei Schichten von dem mittleren äquivalenten Durchmesser der Fasern aus rostfreiem Stahl mit einer Duplex-Mikrostruktur einer zweiten der wenigstens zwei Schichten verschieden ist.

10. Sintermetallgegenstand gemäß einem der vorstehenden Ansprüche, wobei der Metallgegenstand ein oder mehrere Metallsiebe umfasst, die in den Sintermetallgegenstand gesintert sind.

11. Verfahren zur Herstellung eines Sintermetallgegenstands gemäß einem der vorstehenden Ansprüche, umfassend die Schritte
- Herstellen eines ungesinterten Metallgegenstands, der ein Vlies umfasst, das Fasern aus rostfreiem Duplexstahl umfasst;
- Sintern des Metallgegenstands in einem Sinterofen bei einer Sintertemperatur, wobei die Sintertemperatur zwischen 1000 und 1300 °C beträgt, in einer Sinteratmosphäre, die Stickstoff umfasst, wobei der Stickstoff-Partialdruck der Sinteratmosphäre zwischen 10 und 100 mbar beträgt;
- Abkühlen des Sintermetallgegenstands in dem Sinterofen nach dem Sintern, wobei das Abkühlen in den Temperaturbereich zwischen 950 °C und 650 °C innerhalb von weniger als 1,5 Stunden durchgeführt wird.

12. Verfahren gemäß Anspruch 11, wobei das Abkühlen von der Sintertemperatur auf 650 °C in einem Zeitraum von weniger als 1,5 Stunden durchgeführt wird.

13. Verfahren gemäß Ansprüchen 11 oder 12, wobei das Abkühlen von der Sintertemperatur auf 650 °C in einer Atmosphäre, die Stickstoffgas umfasst, durchgeführt wird.

14. Verfahren gemäß einem der Ansprüche 12 oder 13, wobei wenigstens ein Teil des Abkühlens des Sintermetallgegenstands von der Sintertemperatur wenigstens teilweise durch Einführen von Stickstoffgas in den Sinterofen durchgeführt wird.

15. Filtrationsmembran, umfassend einen Sintermetallgegenstand gemäß einem der vorstehenden Ansprüche 1-10.

## Revendications

1. Objet métallique fritté,
comprenant des fibres métalliques dans un agencement de nappe non tissée,
dans lequel lesdites fibres métalliques comprennent des fibres d'acier inoxydable ayant une microstructure duplex,
dans lequel la microstructure duplex est une microstructure mixte d'austénite et de ferrite, dans lequel lesdites fibres d'acier inoxydable sont liées sur au moins une partie de leurs points de contact au moyen de liaisons frittées.

2. Objet métallique fritté selon la revendication 1, dans lequel aucune phase sigma n'est présente dans lesdites fibres d'acier inoxydable.

3. Objet métallique fritté selon l'une quelconque des revendications précédentes, dans lequel lesdites fibres d'acier inoxydable ayant une microstructure duplex ont un pourcentage d'austénite de 30 à 70 % en volume.

4. Objet métallique fritté selon l'une quelconque des revendications précédentes, dans lequel lesdites fibres d'acier inoxydable ayant une microstructure duplex sont des fibres d'acier inoxydable super duplex.

5. Objet métallique fritté selon l'une quelconque des revendications précédentes, dans lequel, dans la microstructure duplex desdites fibres d'acier inoxydable, la taille de grain moyenne des grains d'austénite est inférieure à la moitié du diamètre de fibre équivalent desdites fibres d'acier inoxydable.

6. Objet métallique fritté selon l'une quelconque des revendications précédentes, dans lequel lesdites fibres d'acier inoxydable ont à travers leur volume un pourcentage pondéral sensiblement uniforme de chrome et de molybdène.

7. Objet métallique fritté selon l'une quelconque des revendications précédentes, dans lequel lesdites fibres d'acier inoxydable qui ont une microstructure duplex sont sensiblement exemptes de nitrures.

8. Objet métallique fritté selon l'une quelconque des revendications précédentes, dans lequel lesdites fibres d'acier inoxydable ayant une microstructure duplex ont un diamètre équivalent de 1,5 à 100 µm.

9. Objet métallique fritté selon l'une quelconque des revendications précédentes,
comprenant plus d'une couche de fibres métalliques dans un agencement de nappe non tissée,
dans lequel au moins deux couches desdites plus d'une couche de fibres métalliques comprennent des fibres d'acier inoxydable ayant une microstructure duplex ;
dans lequel la microstructure duplex est une microstructure mixte d'austénite et de ferrite ;
dans lequel lesdites fibres d'acier inoxydable sont liées sur au moins une partie de leurs points de contact au moyen de liaisons frittées ;
dans lequel le diamètre équivalent moyen des fibres d'acier inoxydable ayant une microstructure duplex d'une première desdites au moins deux couches diffère du diamètre équivalent moyen des fibres d'acier inoxydable ayant une microstructure duplex d'une deuxième desdites au moins deux couches.

10. Objet métallique fritté selon l'une quelconque des revendications précédentes, ledit objet métallique comprenant une ou plusieurs mailles métalliques frittées dans l'objet métallique fritté.

11. Procédé de fabrication d'un objet métallique fritté selon l'une quelconque des revendications précédentes, comprenant les étapes qui consistent à :
- fabriquer un objet métallique non fritté comprenant une nappe non tissée comprenant des fibres d'acier inoxydable duplex ;
- fritter l'objet métallique dans un four de frittage à une température de frittage, la température de frittage étant de 1 000 à 1 300 °C, dans une atmosphère de frittage comprenant de l'azote, la pression partielle d'azote de l'atmosphère de frittage étant de 10 à 100 mbars ;
- refroidir l'objet métallique fritté dans le four de frittage après le frittage, le refroidissement dans la plage de températures de 950 °C à 650 °C étant réalisé en moins de 1,5 heure.

12. Procédé selon la revendication 11, dans lequel le refroidissement de la température de frittage à 650 °C est réalisé en un laps de temps inférieur à 1,5 heure.

13. Procédé selon l'une quelconque des revendications 11 ou 12, dans lequel le refroidissement de la température de frittage à 650 °C est réalisé dans une atmosphère contenant de l'azote gazeux.

14. Procédé selon l'une quelconque des revendications 12 ou 13, dans lequel une partie au moins du refroidissement de l'objet métallique fritté à partir de la température de frittage est réalisée au moins en partie par l'introduction d'azote gazeux dans le four de frittage.

15. Membrane filtrante comprenant un objet métallique fritté selon l'une quelconque des revendications précédentes 1 à 10.
